# EUROPÄISCHE PATENTANMELDUNG

(11) **EP 2 397 055 A1**
(43) Veröffentlichungstag der Anmeldung: **21.12.2011**
(21) Anmeldenummer: 11168142.5
(22) Anmeldetag: 31.05.2011
(51) Int. Cl.: A47J 31/46, A47J 31/36, A47J 31/057, A47J 31/44

(54) **Heißgetränkezubereitungsmaschine mit Energierückgewinnung**

(30) Priorität: 15.06.2010 DE 102010030103
(71) Anmelder: BSH Bosch und Siemens Hausgeräte GmbH, 81739 München (DE)
(72) Erfinder: Mathes, Anton, 83364 Neukirchen am Teisenberg (DE); Olenberger, Franz, 21640 Horneburg (DE); Strobl, Robert, 83370 Seeon (DE); Tracy, Timothy Mark, 83352 Altenmarkt (DE)

(57) **Zusammenfassung**

Eine Heißgetränkezubereitungsmaschine mit einem Wasservorratstank (10; 30) zur Bevorratung von Vorratswasser, mit einer Wasserpumpe (12) stromab des Tanks (10), mit einem Durchlauferhitzer (14) zum Erhitzen des Vorratswassers, mit einem Leitungsstrang (16), der den Tank (10), die Pumpe (12) und den Durchlauferhitzer (14) miteinander verbindet, mit einem Leitungsabschnitt (18), der vom Tank (10; 30) ausgehend parallel zum Leitungsstrang (16) verläuft und stromab des Durchlauferhitzers (14) an einem T-Stück (20) in den Leitungsstrang (16) mündet, wird weitergebildet durch ein ansteuerbares Drei-Wege-Ventil (22) im T-Stück (20), das eine Passage des Wassers aus dem Durchlauferhitzer (14) durch den Leitungsabschnitt (18) zurück in den Tank (10) ermöglicht. Es wird außerdem ein Verfahren zum Betreiben und insbesondere zum Kühlen einer Heißgetränkezubereitungsmaschine beschrieben.

## Beschreibung

Die Erfindung betrifft eine Heißgetränkezubereitungsmaschine mit einem Wasservorratstank zur Bevorratung von Zubereitungs- bzw. Vorratswasser, mit einer Wasserpumpe stromab des Tanks, mit einem Durchlauferhitzer zum Erhitzen des Vorratswassers stromab der Pumpe, mit einem Leitungsstrang, der den Tank, die Pumpe und den Durchlauferhitzer miteinander verbindet und zu einer Brüheinheit führt, mit einem Leitungsabschnitt, der vom Tank ausgehend parallel zum Leitungsstrang verläuft und stromab des Durchlauferhitzer an einem T-Stück in den Leitungsstrang mündet. Die Erfindung betrifft außerdem ein Verfahren zum Kühlen eines Durchlauferhitzers in einer Heißgetränkezubereitungsmaschine mittels Durchleiten von Zubereitungswasser.

Bei Heißgetränkezubereitungsmaschinen, die als Heizelement für das Zubereitungswasser über einen Durchlauferhitzer verfügen, muss der Durchlauferhitzer wegen seiner geringen Masse nach Gebrauch aktiv gekühlt werden. Anderenfalls bestünde ein nicht genau definiertes Temperaturniveau im Durchlauferhitzer, das es unmöglich macht, einen anschließenden Zubereitungsvorgang hinsichtlich der Temperatur des Zubereitungswassers korrekt zu steuern, um es auf die gewünschte Zubereitungstemperatur zu bringen. Zur Kühlung des Durchlauferhitzers wird eine gewisse Menge an Zubereitungswasser als Kühlwasser aus dem Tank durch den Durchlauferhitzer in eine Tropfschale oder ein Getränkegefäß geleitet. Die Kühlwassermenge ist daraufhin bemessen, dass möglichst kein Wasser im Durchlauferhitzer verdampft, um eine Kalkbildung im Durchlauferhitzer zu vermeiden. Diese Art der Kühlung des Durchlauferhitzers verbraucht viel Wasser.

Es ist daher Aufgabe der vorliegenden Erfindung, den Wasserverbrauch einer Heißgetränkezubereitungseinrichtung mit einem Durchlauferhitzer zu reduzieren.

Diese Aufgabe wird bei einer Heißgetränkezubereitungseinrichtung der eingangs genannten Art erfindungsgemäß dadurch gelöst, dass ein ansteuerbares Drei-Wege-Ventil im oder an der Stelle des T-Stücks eine Passage des Wassers aus dem Durchlauferhitzer durch den Leitungsabschnitt hindurch zurück in den Tank ermöglicht. Das Drei-Wege-Ventil sperrt während des Kühlvorgangs den Leitungsstrang in Richtung einer Brühkammer oder sonstiger Zubereitungseinrichtungen bzw. in Richtung des Getränkegefäßes ab und leitet den Wasserstrom in den Leitungsabschnitt ein, der wieder in den Tank für das Vorratswasser mündet. Zum Kühlen des Durchlauferhitzers wird also, wie im Stand der Technik auch, Vorratswasser aus dem Tank durch den Durchlauferhitzer gepumpt. Die Erfindung wendet sich allerdings davon ab, das Kühlwasser ungenutzt in eine Tropfschale oder dergleichen abzuleiten. Sie macht sich vielmehr die Erkenntnis zunutze, dass das Kühlwasser hygienisch einwandfrei ist und daher durchaus wiederverwendet werden kann. Sie verfolgt daher das Prinzip, das Kühlwasser mehrmals zu benutzen und daher in den Wasservorratstank zurückzuleiten. Dort kann es für einen späteren Zubereitungsvorgang oder auch erneut als Kühlwasser zur Verfügung stehen. Die Wieder- oder Weiterverwendung des Kühlwassers der Heißgetränkezubereitungseinrichtung reduziert also deren Wasserbedarf. Bei gleichem Vorratsvolumen können also mit einer erfindungsgemäßen Zubereitungseinrichtung mehr Getränke bezogen werden. Außerdem entfällt ein Wartungsvorgang, bei dem eine Tropfschale entleert werden müsste.

Vor allem das zuerst in den Durchlauferhitzer gepumpte Kühlwasser kann bei der Energieaufnahme verdampfen. Der Dampf gelangt dann ungebremst in den Wasservorratstank und kollabiert dort. Dadurch entsteht ein deutlich hörbares und an sich unerwünschtes Geräusch. Im Leitungsabschnitt oder spätestens im Wasservorratstank selbst kann daher ein Dampfentspanner eingebaut sein, der dem Dampf die Wärmeenergie entzieht. Er ist also grundsätzlich dazu ausgebildet, die im Dampf enthaltene Wärmeenergie weitgehend aufzunehmen und an die Umgebung abzustrahlen. Der Dampfentspanner kann ähnlich wie der Leitungsabschnitt röhrenförmig mit einem Zu- und einem Ablauf sein und dazwischen ein abgeschlossenes System bilden. Zwischen seinem Zu- und Ablauf durchläuft der Dampf ein Labyrinth, das große Oberflächen als Kontaktflächen zum Dampf bietet und ständige Richtungswechsel der Fließrichtung des Dampfs erzwingt. Durch den Zwangskontakt mit den großen Oberflächen des Labyrinths verliert der Dampf seine Wärmeenergie, die über die Oberflächen des Labyrinths und das Gehäuse des Dampfentspanners nach außen abgestrahlt wird. Zur Intensivierung der Wärmeabstrahlung kann das Gehäuse des Dampfentspanners Kühlrippen ausweisen. Der Dampf kollabiert gezielt und ohne nennenswerte Geräuschentwicklung und gelangt so in den Wasservorratstank.

Ist der Dampfentspanner selbst bereits in Vorratstank angebracht, kann seine Wärmeabgabe durch die außenliegenden Kühlrippen, die vom Vorratswasser umspült sind, effizienter Wärmeenergie an das Wasser abstrahlen. Mit dem Dampfentspanner im Wasservorratstank bildet das Wasser im Tank selbst quasi eine thermale Senke. Als abgeschlossenes System leitet der Dampfentspanner schwankende Druckverhältnisse weiter. Dadurch wird Wasser beim Abkühlen der Heizung aus dem Wasservorratstank zurück in den Entspanner und zum Teil bis in die Heizung gezogen. Dadurch steht der Dampfentspanner dauerhaft unter Wasser, was die Kalkbildung im Dampfentspanner reduziert.

Das Kühlwasser dient bestimmungsgemäß dazu, den Durchlauferhitzer auf ca. 50°C abzukühlen. Das kühle bzw. kalte Vorratswasser nimmt also bei seiner Passage durch den Durchlauferhitzer dessen Restenergie auf. Erfindungsgemäß gelangt das erwärmte Kühlwasser zurück in den Tank, wo es sich mit kühlem Vorratswasser vermischt und dieses geringfügig erwärmt. Nach einer vorteilhaften Ausgestaltung der Erfindung verfügt die Zubereitungsmaschine daher über Mittel zum Übertragen von Wärmeenergie aus dem Leitungsabschnitt, der das erwärmte Kühlwasser transportiert, in den Leitungsstrang stromauf des Durchlauferhitzers, der das unmittelbar als nächstes verwendete Vorratswasser zum Durchlauferhitzer transportiert. Die Energie des Durchlauferhitzers, die nach einem Zubereitungsvorgang bei dessen Kühlung abgeführt werden muss, um wieder definierte Verhältnisse zu generieren, kann so einem nachfolgenden Zubereitungsvorgang zur Verfügung gestellt werden. Durch die Übertragung der Wärmeenergie aus dem Leitungsstrang in den Leitungsabschnitt wird sie unmittelbar auf dasjenige Vorratswasser übertragen, das als nächstes in den Durchlauferhitzer gelangt. Sowohl stromab als auch stromauf des Durchlauferhitzers befindet sich jeweils ein Temperatursensor, der die aktuelle Wassertemperatur erfasst. Gelangt bereits vorgewärmtes Vorratswasser in den Durchlauferhitzer, so benötigt er weniger Energie, um das erwärmte Vorratswasser auf die erforderliche Zubereitungstemperatur zu erhitzen. Damit kann die Energie, die beim Kühlvorgang dem Durchlauferhitzer entzogen wurde, dem nächsten Zubereitungsvorgang wieder zugeführt werden. Dadurch reduziert sich die Energieaufnahme der Zubereitungseinrichtung.

Erfindungsgemäß wird Wärmeenergie aus dem Leitungsstrang in den Leitungsabschnitt übertragen. Nach einer weiteren vorteilhaften Ausgestaltung der Erfindung stehen der Leitungsstrang und der Leitungsabschnitt stromab des Tanks und stromauf des Durchlauferhitzers zumindest bereichsweise in Berührkontakt. Die Mantelflächen sowohl des Leitungsstrangs als auch des Leitungsabschnitts liegen dazu unmittelbar aneinander, um eine Übertragung der Wärmeenergie aus dem zurückfließenden erwärmten Kühlwasser in das Vorratswasser stromauf des Durchlauferhitzers zu ermöglichen.

Nach einer weiteren vorteilhaften Ausgestaltung der Erfindung ist zwischen dem Tank und dem Durchlauferhitzer ein Wärmetauscher angeordnet, der die Wärmeenergie aus dem zurückfließenden Kühlwasser in das Vorratswasser stromauf des Durchlauferhitzers überträgt. In einer einfachen Ausgestaltungsform können der Leitungsabschnitt und der Leitungsstrang in diesem Bereich eine einzige Wandung als Begrenzung miteinander teilen, um einen effektiven Wärmeübergang zu ermöglichen, ohne die Wasserströme direkt miteinander zu vermischen. Der Wärmetauscher kann beispielsweise wie ein Liebig-Kühler aufgebaut, also als Doppelrohr ausgebildet sein. In dessen innerem Rohr kann beispielsweise das Vorratswasser dem Durchlauferhitzer zuströmen und in dessen äußerem Rohr, das das innere Rohr quasi mantelartig umgibt, kann das erwärmte und zurückfließende Kühlwasser geführt sein. Dessen Energie wird auf der gesamten Mantelfläche des inneren Rohrs an das Vorratswasser stromauf des Durchlauferhitzers übertragen. Ein Wärmetauscher dieser Art kann wegen seiner zylindrischen Struktur relativ Platz sparend und ohne größere Änderung bekannter Konstruktionen untergebracht werden. Bei einem anderen Platzangebot können auch andere Wärmetauschertypen wie Platten- oder Kreuzstromwärmetauscher eingesetzt werden.

Wärmetauscher sind regelmäßig verlustbehaftet, d. h. nicht die gesamte Energiemenge des erwärmten Kühlwassers kann auf das Vorratswasser übertragen werden, weil der Korpus des Wärmetauschers selbst ebenfalls Wärme aufnimmt und ungenutzt abstrahlt. Nach einer weiteren vorteilhaften Ausgestaltung der Erfindung kann daher alternativ oder zusätzlich zur Anordnung eines Wärmetauschers das erwärmte und zurückfließende Kühlwasser mehr oder weniger unmittelbar als Vorratswasser für den nächsten Zubereitungsvorgang verwendet werden. Stromab des Tanks und stromauf der Pumpe kann daher ein T-Stück im Pumpenvorlauf angeordnet sein, über das das erwärmte Kühlwasser dem Zubereitungswasser eines nachfolgenden Zubereitungsvorgangs zugemischt wird. Dadurch kann die Energie aus der Abkühlung des Durchlauferhitzers mit dem Vorratswasser als Energieträger unmittelbar und ohne den Umweg eines Wärmeaustauschs dem nächsten Zubereitungsvorgang zugeführt werden. Blasen im erwärmten Kühlwasser drücken es außerdem in den Wassertank, so dass es sich dort mit dem kühlen Vorratswasser vermischt. Es wird nicht vollständig in den Durchlauferhitzer gepumpt und führt damit dort nicht zur Überhitzung. Der konstruktive Aufwand dieser Ausgestaltungsform der Erfindung beschränkt sich im Wesentlichen auf ein T-Stück im Leitungsstrang und ist damit äußerst gering.

Nach einer weiteren vorteilhaften Ausgestaltung der Erfindung kann das erwärmte Kühlwasser in den Vorratstank zurückgeführt werden. Dazu können ein Auslass, der den Leitungsstrang Richtung Durchlauferhitzer mit dem Tank verbindet, und ein Einlass, der den Leitungsabschnitt für das zurückfließende Kühlwasser mit dem Tank verbindet, in unmittelbarer räumlicher Nähe am Tank angeordnet sein. Das erwärmte Kühlwasser, das in den Tank gelangt, kann beim nächsten Zubereitungsvorgang unmittelbar als neues Vorratswasser angesaugt werden, bevor es seine Energie an das übrige kühlere Vorratswasser des Vorratstanks abgegeben hat. Durch die Vermischung mit dem kühleren Vorratswasser erhält es eine gleichmäßigere Temperatur, die zu geringerer Blasenbildung im Durchlauferhitzer führt. Dadurch lässt sich sowohl das Erhitzen des Zubereitungswassers als auch die Abkühlung des Durchlauferhitzers genauer steuern.

Nach einer weiteren vorteilhaften Ausgestaltung der Erfindung ist der Einlass oberhalb des Auslasses im Tank angeordnet. Diese Anordnung ist zunächst überraschend, weil das erwärmte Kühlwasser bei seinem Eintreffen in den Tank bekanntermaßen die Tendenz hat, im kühlen Vorratswasser aufzusteigen. Erfindungsgemäß wird es dadurch allerdings bei einem nachfolgenden Zubereitungsvorgang nicht sofort bzw. nicht unmittelbar und vollständig Richtung Durchlauferhitzer angesaugt. Die erfinderische Anordnung von Ein- und Auslass führt also zu einer gewissen Vermischung zwischen erwärmtem Kühlwasser und kaltem Vorratswasser, die erwünscht ist. Sie vermeidet nämlich, dass bereits hoch erhitztes Kühlwasser unmittelbar als Vorratswasser wieder in den Durchlauferhitzer gelangt, wo es aufgrund seines hohen Wärmeenergiegehalts sofort verdampfen könnte. Eine gewisse Wärmeabgabe an das übrige Vorratswasser und eine geringfügige Abkühlung des erwärmten Kühlwassers ist daher durchaus erwünscht.

Zur besseren Ausnutzung der Energie ist es jedoch wünschenswert, die Vermischung des erwärmten Kühlwassers und des kalten Vorratswassers zu steuern oder wenigstens zu begrenzen. Nach einer weiteren vorteilhaften Ausgestaltung der Erfindung verfügt sie daher über Mittel, die eine Wärmekonvektion des Vorratswassers innerhalb des Tanks einschränken. Erfindungsgemäß wird das zurückfließende Kühlwasser zugleich weitgehend in einem Ansaugbereich des Tanks gehalten, aus dem das Vorratswasser für den nächsten Zubereitungsvorgang angesaugt wird. Damit kann es seine Wärmeenergie nur an ein begrenztes Wasservolumen innerhalb des Tanks abgeben und damit weitgehend vollständig für den nächsten Zubereitungsvorgang zur Verfügung stehen. Die beschränkte Wärmekonvektion vermeidet also ein vollständiges Durchmischen des kühlen Vorratswassers und des erwärmten Kühlwassers. Es konzentriert die Vermischung nur auf ein Teilvolumen des Vorratstanks, das für den nächsten Zubereitungsvorgang genutzt wird.

Nach einer weiteren vorteilhaften Ausgestaltung der Erfindung ist in dem Tank ein Anschlussbereich mit einem definierten Wasservolumen ausgebildet, in dem der Einlass und der Auslass angeordnet sind. Erfindungsgemäß wird der Anschlussbereich durch eine wasserdurchlässige Abtrennung vom übrigen Tankvolumen abgetrennt, die als ein Mittel zur Einschränkung der Konvektion wirkt. Die wasserdurchlässige Abtrennung kann beispielsweise als Trennwand mit Durchbrüchen ausgebildet sein, die an wenigstens zwei Seiten an Behälterwänden des Tanks gehalten ist. Alternativ kann sie als Kragwand beispielsweise nur mit dem Bodenbereich oder nur einer Seitenwand des Tanks verbunden sein und im Übrigen Spalte zu den Tankwänden oder dem Boden freilassen. Eine weitere Alternative kann in einer Tauchwand bestehen, die am Deckel angebracht ist und bei aufgesetztem Deckel im Übrigen weitgehend kontaktfrei in den Wasservorratstank eintaucht. Sie dürfte den geringsten Aufwand bei der Reinigung des Wassertanks verursachen.

Die Abtrennung kann sich im Wesentlichen senkrecht erstrecken, also im Wassertank stehen. Sie kann den Anschlussbereich aber auch waagrecht abtrennen, beispielsweise als separate Abdeckung einen Wärmeverlust an einer Wasseroberfläche reduzieren. So wie eine vertikale Abtrennung eine horizontale Vermischung reduziert, kann sie als waagrechte Abtrennung die vertikale Konvektion auf den Anschlussbereich des Tanks beschränken. Sie wirkt damit wie ein überspülter Deckel innerhalb des Wassertanks.

Gemeinsam ist allen Varianten, dass sie den Anschlussbereich und damit ein Teilvolumen des Tanks nur insoweit abtrennen, als sie eine Vermischung und Wärmekonvektion auf den Anschlussbereich beschränken, aber im Bedarfsfall ein Nachfließen von Wasser aus dem übrigen Wasservorratstank ermöglichen. Das Wasser innerhalb des Anschlussbereichs unterliegt damit einem möglichst geringen Austausch mit dem übrigen Vorratswasser außerhalb des Anschlussbereichs.

Als günstiges Teilvolumen, das vom übrigen Wasservorrat abgetrennt wird, hat sich ein Volumen von der Größe etwa einer Zubereitungsportion herausgestellt. Die Größe des Volumens bestimmt sich einerseits aus der erforderlichen Kühlwassermenge, die eine effektive Abkühlung des Durchlauferhitzers unter weitgehender Vermeidung einer Blasenbildung durch Verdampfen von Kühlwasser sicherstellt. Andererseits muss das Teilvolumen eine Vorratswassermenge zur Verfügung stellen, die das erwärmte Kühlwasser so weit abkühlt, dass es bei einem nachfolgenden Zubereitungsvorgang ebenfalls nicht zu einem Verdampfen im Durchlauferhitzer kommt. In Versuchen ergab sich daraus ein günstiges Volumen von etwa 60 bis 100 ml. Erfordert ein nachfolgender Zubereitungsvorgang ein größeres Volumen an Zubereitungswasser, so kann es aus dem Vorratstank jenseits der wasserdurchlässigen Abtrennung nachfließen.

Nach einer weiteren vorteilhaften Ausgestaltung der Erfindung ist ein Zusatztank im Leitungsabschnitt angeordnet, in den der Leitungsstrang mündet und der das Volumen des oben beschriebenen günstigen Teilvolumens eines erfinderischen Wassertanks aufweist. Statt zurück in den Vorratstank, gelangt das erwärmte Kühlwasser jetzt in den Zusatztank stromab des Vorratstanks und stromauf der Pumpe. Der Aufbau des Wasservorratstanks braucht daher nicht geändert zu werden, der unverändert lediglich einen Auslass aufweist. Er mündet jetzt allerdings nicht direkt in den Zulauf der Pumpe, sondern zunächst in den Zusatztank. Da das Teilvolumen jetzt nicht mehr innerhalb des Vorratstanks abgetrennt wird, sondern in einem separaten Tank, kann es effektiver gegen Auskühlen und damit gegen Energieverlust gedämmt werden. Dadurch steigt die Effizienz der erfinderischen Konstruktion.

Die eingangs genannte Aufgabe wird außerdem durch ein Verfahren zum Betreiben, insbesondere zum Kühlen einer Heißgetränkezubereitungseinrichtung mit einem Durchlauferhitzer und einem Wasservorratstank gelöst, das folgende Schritte umfasst:
a) Pumpen von Vorratswasser aus dem Wasservorratstank als Kühlwasser durch den erhitzten Durchlauferhitzer,
b) Zurückführen des Kühlwassers in einen Pumpenvorlauf.

Da das Kühlwasser aus dem Vorrat an Vorratswasser stammt und lediglich den Durchlauferhitzer passiert hat, ist es hygienisch sauber und kann daher erneut sowohl als Kühlwasser als auch als Zubereitungswasser eines nachfolgenden Zubereitungsvorgangs verwendet werden. Es wird daher erfindungsgemäß in den Pumpenvorlauf, also einen Bereich stromauf der Pumpe, zurückgeführt. Das kann der Wasservorratstank, ein stromab des Wasservorratstanks und stromauf der Pumpe angebrachter Zwischentank oder lediglich ein Leitungsabschnitt stromauf der Pumpe sein. Dadurch kann der Wasserverbrauch der Heißgetränkezubereitungseinrichtung deutlich reduziert werden, weil das Kühlwasser für einen späteren Zubereitungsvorgang nicht verloren geht.

Nach einer vorteilhaften Ausgestaltung des erfinderischen Verfahrens kann zusätzlich die Wärmeenergie des Kühlwassers unmittelbar oder mittelbar auf das nächste Zubereitungswasser übertragen werden. Dadurch kann die Energie, die dem Durchlauferhitzer beim Kühlvorgang entzogen wird, erhalten und einem anschließenden Zubereitungsvorgang zugeführt werden. Dadurch lässt sich auch der Energiebedarf der Heißgetränkezubereitungseinrichtung reduzieren.

Die wenigste Energie geht verloren, wenn das Wasser selbst als Energieträger dienen kann. Bei einer unmittelbaren Rückspeisung des erwärmten Kühlwassers in den Durchlauferhitzer kann es jedoch zu seiner Überhitzung und unerwünschten Dampfbildung im Durchlauferhitzer kommen. Nach einer weiteren vorteilhaften Ausgestaltung der Erfindung kann daher das erwärmte Kühlwasser mit einer genau bemessenen Menge kühlen Vorratswassers vermischt und das vermischte Wasser für einen weiteren Zubereitungsvorgang bereitgestellt werden.

Das Prinzip der Erfindung wird im Folgenden anhand einer Zeichnung beispielshalber noch näher erläutert. In der Zeichnung zeigen:
Figur 1: eine Prinzipdarstellung einer ersten Ausgestaltungsform der Erfindung,
Figur 2: eine Draufsicht eines erfindungsgemäßen Wassertanks,
Figur 3: eine Schnittansicht des Wassertanks, und
Figur 4: eine Prinzipdarstellung einer zweiten Ausgestaltungsform der Erfindung.

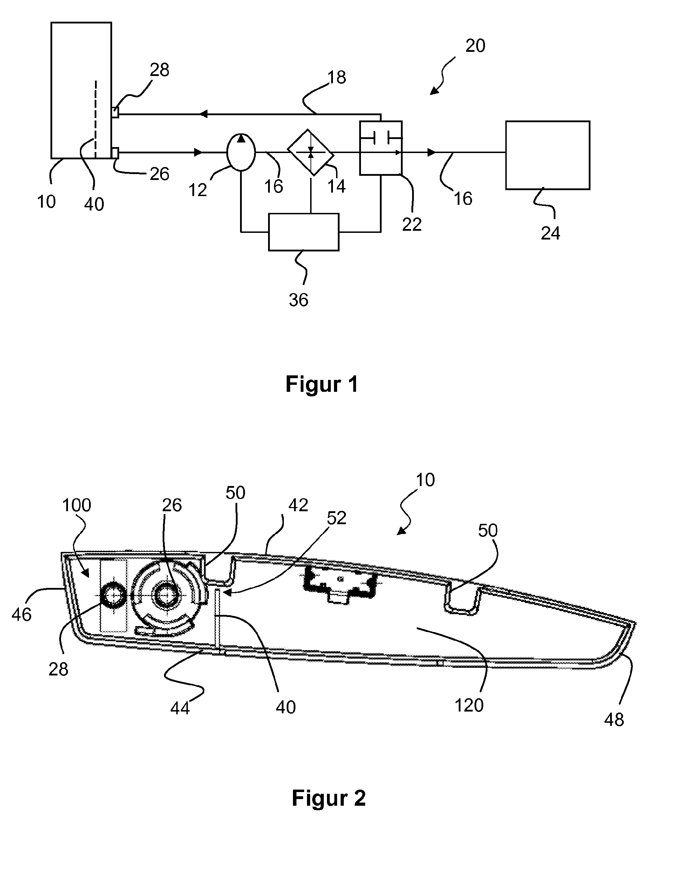

Figur 1 ist eine schematische Darstellung der wesentlichen Bestandteile einer erfinderischen Heißgetränkezubereitungseinrichtung: Sie umfasst einen Wasservorratstank 10, eine Wasserpumpe 12 und einen Durchlauferhitzer 14 zur Erhitzung des Vorratswassers aus dem Wassertank 10. Ein Leitungsstrang 16 verbindet den Tank 10, die Pumpe 12 und den Durchlauferhitzer 14 in dieser Strömungsrichtung. Stromab des Durchlauferhitzers enthält der Strang 16 ein T-Stück 20 und mündet in einer Brüheinheit 24 der Heißgetränkezubereitungseinrichtung. Eine Steuereinrichtung 36 ist elektrisch mit der Pumpe 12, dem Durchlauferhitzer 14 und dem Drei-Wege-Ventil 22 verbunden und empfängt und verarbeitet Steuersignale zur Ansteuerung der genannten Baueinheiten.

Parallel zum Leitungsstrang 16 verläuft ein Leitungsabschnitt 18 vom T-Stück 20 bis zum Wassertank 10. Er umgeht also die Pumpe 10 und den Durchlauferhitzer 14. Der Leitungsstrang 16 schließt an einem Auslass 26 am Tank 10 an, der Leitungsabschnitt 18 an einem Einlass 28. Der Auslass 26 und der Einlass 28 liegen am Wassertank 10 unmittelbar übereinander, wobei der Einlass 28 über dem Auslass 26 angeordnet ist. Sie münden in einem Anschlussbereich 100 in den Tank 10, den eine senkrechte wasserdurchlässige Wand 40 als Teilvolumen innerhalb des Tanks 10 abtrennt.

Zur Zubereitung eines Heißgetränks pumpt die Pumpe 12 Wasser aus dem Vorratstank 10 durch den Leitungsstrang 16 in den Durchlauferhitzer 14. Dort wird es erhitzt und über den Leitungsstrang 16 durch das T-Stück 20 hindurch in die Brüheinheit 24 geleitet. Dort entsteht in an sich bekannter Weise das gewünschte bzw. ausgewählte Heißgetränk.

Im T-Stück 20 ist ein Keramikventil 22 als Drei-Wege-Ventil angeordnet. Es ist nur für die Zwecke der Erfindung als Drei-Wege-Ventil bezeichnet, weil es tatsächlich gegebenenfalls mehr als nur drei Wege schalten kann. So kann das Vorratswasser stromab des Durchlauferhitzers entweder als erhitztes Wasser in eine Brühkammer oder als Dampf in einen Milchschäumer eingeleitet werden. Diese und gegebenenfalls weitere Verschaltungen leistet das Keramikventil 22, sie sind jedoch für die vorliegende Erfindung unwesentlich. Entscheidend ist vorliegend die Möglichkeit der geradlinigen Durchleitungen des Heißwassers oder Dampfes entlang des Leitungsstrangs 16 in die Brüheinheit 24 oder eine Ableitung des Heißwassers stromab des Durchlauferhitzers 14 in den Leitungsabschnitt 18 hinein. Von dort gelangt das Wasser über den Einlass 28 zurück in den Wasservorratstank 10.

Um den Durchlauferhitzer 14 nach einem Zubereitungsvorgang abzukühlen und für einen nachfolgenden Zubereitungsvorgang wieder auf einen definierten Temperaturzustand zu bringen, pumpt die Pumpe 12 Vorratswasser aus dem Vorratstank 10 durch den Durchlauferhitzer 14. Dabei nimmt das Kühlwasser bestimmungsgemäß Wärmeenergie aus dem Durchlauferhitzer 14 auf, um ihn abzukühlen.

Erfindungsgemäß wird nun das erwärmte Kühlwasser im Leitungsstrang 16 stromab des Durchlauferhitzers 14 nicht in eine Tropfschale oder dergleichen eingeleitet. Vielmehr schaltet die Steuereinrichtung 30 beim Kühlvorgang das Drei-Wege-Ventil 22 um, so dass es das erwärmte Kühlwasser in den Leitungsabschnitt 18 umlenkt. Dadurch gelangt es zurück in den Wassertank 10. Das Kühlwasser geht also nicht verloren, sondern steht in einem späteren Zubereitungsprozess wieder zur Verfügung.

Der Einlass 28 mündet knapp oberhalb des Auslasses 26 des Leitungsstrangs 16 in den Wassertank 10. Das zurückfließende erwärmte Kühlwasser gelangt also oberhalb des Auslasses 26 in den Wassertank 10, jedoch innerhalb des Anschlussbereichs 100. Aufgrund von Konvektion vermischt sich das zurückfließende erwärmte Kühlwasser mit dem Teilvolumen innerhalb des Anschlussbereichs 100. Das erwärmte Kühlwasser erwärmt das Teilvolumen wesentlich stärker, als es das Gesamtvolumen des Wassertanks 10 erwärmen würde. Das Teilvolumen erhält damit eine höhere Temperatur als der übrige Wasservorrat im Tank 10. Damit geht die aus dem Kühlvorgang gewonnene Energie nicht verloren, indem sie den gesamten Wasservorrat im Tank 10 erwärmt. Vielmehr steht sie nahezu vollständig für einen späteren Zubereitungsvorgang eines weiteren Heißgetränks zur Verfügung.

Damit jedoch bei einem anschließenden Zubereitungsvorgang das erhitzte Kühlwasser nicht sofort angesaugt und im Durchlauferhitzer überhitzt wird, ist im Anschlussbereich 100 für eine gewisse Konvektion und Vermischung des heißen Kühlwassers mit dem kalten Vorratswasser gesorgt: Der Einlass 28 für das erhitzte Kühlwasser ist oberhalb des Auslasses 26 angeordnet, so dass das aufsteigende erhitzte Kühlwasser nicht ohne Vermischung mit Vorratswasser wieder in den Leitungsstrang 16 gelangen kann.

Figur 2 zeigt in einer Draufsicht eines erfindungsgemäßen Wassertanks 10 dessen vier seitliche Begrenzungswände 42, 44, 46, 48. Die Seitenwand 42 durchziehen zwei senkrecht verlaufende Schienen 50, die in den Wassertank 10 einspringen. Von der gegenüberliegenden Seitenwand 44 steht etwa im linken Viertel des Wassertanks 10 die Trennwand 40 in den Wassertank 10 hinein. Sie ist mit der Seitenwand 44 fest verbunden und lässt gegenüber der linken einspringenden Schiene 50 einen Spalt 52 frei. Damit schließen die Trennwand 40, ein Teil der Seitenwand 44, die Wand 46, ein Teil der Seitenwand 42 und die linke Schiene 50 den Anschlussbereich 100 ein, in den der Auslass 26 und der Einlass 28 münden. Das Teilvolumen innerhalb des Anschlussbereichs 100 ist also vom übrigen Hauptbereich 120 des Wassertanks 10 weitgehend abgeschlossen. Eine fluidische Verbindung besteht lediglich über den Spalt 52, über den ein Volumenausgleich stattfindet, sobald der Wasserspiegel im Anschlussbereich 100 absinkt.

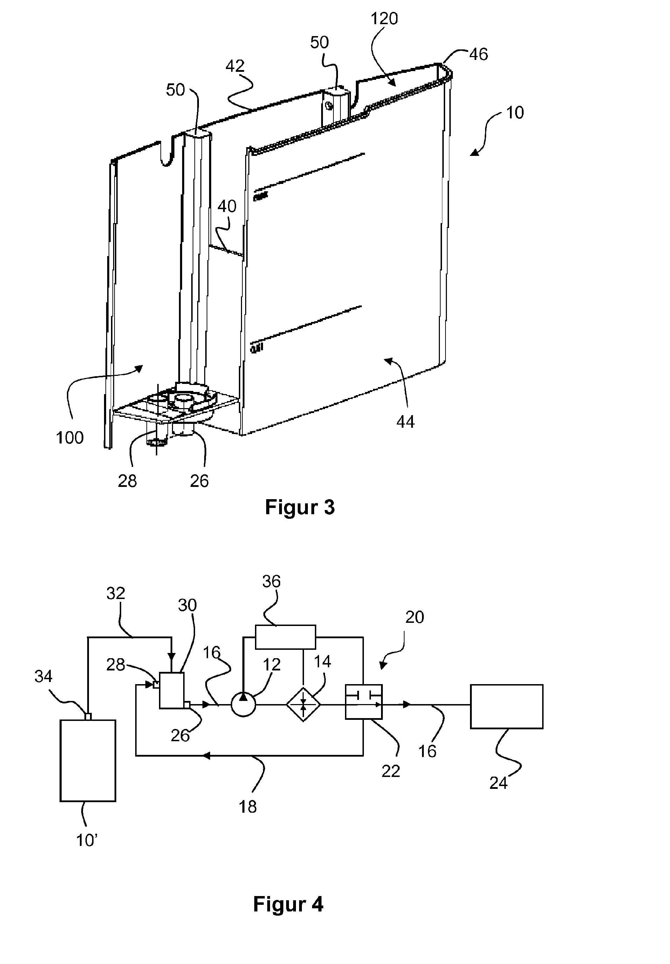

Die Schnittansicht des Wassertanks 10 in Figur 3 bietet einen Blick in den frei geschnittenen Anschlussbereich 100, in dem die Seitenwand 46 und ein Teil der Seitenwand 44 nicht dargestellt sind. Sie verdeutlicht die unterschiedliche Höhenlage des Auslasses 26 und des Einlasses 28: Demnach endet der Auslass 26 auf einem niedrigeren Niveau innerhalb des Anschlussbereichs 100 als der Einlass 28. Die unterschiedliche relative Höhenlage zueinander bewirkt, dass erwärmtes Kühlwasser, das über den Einlass 28 in den Tank 10 strömt, sich jedenfalls mit dem Vorratswasser innerhalb des Anschlussbereichs 100 vermischt, bevor es über den Auslass 26 Richtung Pumpe angesaugt wird. Die unterschiedliche Höhenpositionierung vermeidet also, dass erhitztes Kühlwasser nach dem Rückströmen in den Wassertank 10 durch den Einlass 28 unmittelbar und ohne Vermischung und Vorabkühlung durch das übrige Vorratswasser sofort vom Auslass 26 angesaugt und in den Durchlauferhitzer 14 (vgl. Fig. 1) gefördert werden kann. Dadurch lässt sich eine Überhitzung des Zubereitungswassers im Durchlauferhitzer 14 samt unerwünschter Blasenbildung vermeiden.

Figur 4 zeigt eine zweite Ausgestaltungsform der Erfindung, ebenfalls stark schematisiert. Übereinstimmend mit Figur 1 umfasst der erfindungsgemäße Bestandteil der Heißgetränkezubereitungseinrichtung eine Pumpe 12, einen Durchlauferhitzer 14, einen Leitungsstrang 16, einen Leitungsabschnitt 18, ein T-Stück 20 mit einem Keramikventil 22, eine Brüheinheit 24 und eine Steuereinrichtung 36. Abweichend von Figur 1 ist der Wasservorratstank 10' konventionell ausgebildet, enthält also keine Wand 40 (vgl. Figur 1) und lediglich einen herkömmlichen Auslass 34 in eine Zuleitung 32 Richtung Pumpe 12. Außerdem münden der Leitungsstrang 16 und der Leitungsabschnitt 18 gemäß Figur 4 in einen Zusatztank 30, der über die Zuleitung 32 mit dem ihm gegenüber volumengrößeren Wasservorratstank 10' verbunden ist. Der Zusatztank 30 hat ein deutlich geringeres Volumen von ca. 70 ml. Es ist so bemessen, dass es für einen Zubereitungsvorgang eines Getränks ausreicht.

Der Zusatztank 30 erfüllt eine ähnliche Funktion wie der Anschlussbereich 100 gemäß Figur 1. Aufgrund seiner separaten Anordnung ist er jedoch thermisch wesentlich effektiver als jener. Da auch die Erfordernisse eines großen Wasservorratstanks konstruktiv nicht berücksichtig werden müssen, können jetzt der Auslass 26 und der Einlass 28 in den Tank 30 in einer hydraulisch optimalen Positionierung angebracht werden, die eine möglichst gleichmä-βige Durchmischung des erhitzten Kühlwassers mit dem Vorratswasser im Zusatztank 30 ermöglicht. Bei einem Kühlvorgang wird also Vorratswasser aus dem Tank 30 in bekannter Weise in den Durchlauferhitzer 14 gepumpt, wo es die Wärmeenergie des Durchlauferhitzers 14 aufnimmt. Anschließend leitet es das Keramikventil 22 über den Leitungsstrang 18 und den Einlass 28 zurück in den Zusatztank 30. Dort vermischt sich das erhitzte Kühlwasser mit einer genau definierten und deutlich kleineren Menge als im Anschlussbereich 100 gemäß Figur 1. Der abgeschlossene Zusatztank 30 ist zudem gegen Wärmeverlust wesentlich besser gedämmt, als der prinzipiell offene Wasservorratstank 10 gemäß Figur 1. Dadurch kann die im Kühlprozess aufgenommene Wärmeenergie aus dem Durchlauferhitzer 14 deutlich effektiver erhalten bleiben und in weit größeren Umfang für einen nachfolgenden Zubereitungsprozess zur Verfügung stehen.

Da es sich bei den vorhergehenden, detailliert beschriebenen Zubereitungseinrichtungen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Wärmetauscher oder des Zusatztanks in anderer Form als in der hier beschriebenen erfolgen. Ebenso kann die Trennwand im Wasservorratstank in einer anderen Form ausgestaltet werden, wenn dies aus Platzgründen bzw. designerischen Gründen notwendig ist. Weiterhin schließt die Verwendung der unbestimmten Artikel ,,ein" bzw. "eine" nicht aus, dass die betreffenden Merkmale auch mehrfach vorhanden sein können.

### Bezugszeichenliste

- 10, 10': Wasservorratstank
- 12: Pumpe
- 14: Durchlauferhitzer
- 16: Leitungsabschnitt
- 18: Leitungsstrang
- 20: T-Stück
- 22: Keramikventil
- 24: Brüheinheit
- 26: Auslass
- 28: Einlass
- 30: Zusatztank
- 32: Zuleitung
- 34: Auslass
- 36: Steuerungseinrichtung
- 40: Trennwand
- 42, 44, 46, 48: Seitenwand
- 50: Schiene
- 52: Spalt
- 100: Anschlussbereich
- 120: Hauptbereich

## Patentansprüche

1. Heißgetränkezubereitungsmaschine mit einem Wasservorratstank (10; 30) zur Bevorratung von Vorratswasser, mit einer Wasserpumpe (12) stromab des Tanks (10), mit einem Durchlauferhitzer (14) zum Erhitzen des Vorratswassers, mit einem Leitungsstrang (16), der den Tank (10), die Pumpe (12) und den Durchlauferhitzer (14) miteinander verbindet, mit einem Leitungsabschnitt (18), der vom Tank (10; 30) ausgehend parallel zum Leitungsstrang (16) verläuft und stromab des Durchlauferhitzers (14) an einem T-Stück (20) in den Leitungsstrang (16) mündet, **gekennzeichnet durch** ein ansteuerbares Drei-Wege-Ventil (22) im T-Stück (20), das eine Passage des Wassers aus dem Durchlauferhitzer (14) **durch** den Leitungsabschnitt (18) zurück in den Tank (10) ermöglicht.

2. Zubereitungsmaschine nach obigem Anspruch, **gekennzeichnet durch** Mittel zum Übertragen von Wärmeenergie aus dem Leitungsabschnitt (16) in den Leitungsstrang (18) stromauf des Durchlauferhitzers (14).

3. Zubereitungsmaschine nach obigem Anspruch, **dadurch gekennzeichnet, dass** der Leitungsstrang (18) und der Leitungsabschnitt (16) stromab des Tanks (10) und stromauf des Durchlauferhitzers (14) zumindest bereichsweise in Berührkontakt stehen.

4. Zubereitungsmaschine nach obigem Anspruch, **gekennzeichnet durch** einen Wärmetauscher zwischen dem Tank (10) und dem Durchlauferhitzer (14), der Wärmeenergie aus dem Kühlwasser in das Vorratswasser überträgt.

5. Zubereitungsmaschine nach obigem Anspruch mit einem Einlass (28), der den Leitungsstrang (18) mit dem Tank (10) verbindet, und einem Auslass (26), der den Leitungsabschnitt (16) mit dem Tank (10) verbindet, **dadurch gekennzeichnet, dass** der Einlass (28) und der Auslass (26) in unmittelbarer räumlicher Nähe angeordnet sind.

6. Zubereitungsmaschine nach obigem Anspruch, **dadurch gekennzeichnet, dass** der Einlass (28) oberhalb des Auslasses (26) angeordnet ist.

7. Zubereitungsmaschine nach obigem Anspruch, **gekennzeichnet durch** Mittel (40), die eine Wärmekonvektion innerhalb des Tanks (10) einschränken.

8. Zubereitungsmaschine nach obigem Anspruch mit einem Anschlussbereich (100) innerhalb des Tanks (10), in dem der Einlass (28) und der Auslass (26) angeordnet sind, **gekennzeichnet durch** eine wasserdurchlässige Abtrennung (40), die ein Teilvolumen des Tanks (10), in das der Einlass (28) ein- und aus dem der Auslass (26) ausmündet, vom übrigen Tankvolumen (120) abtrennt.

9. Zubereitungsmaschine nach obigem Anspruch, **gekennzeichnet durch** einen Zusatztank (30) mit dem Volumen eines Kühlwasserdurchgangs, in den eine Zuleitung (32) aus dem Wasservorratstank (10) und der Leitungsstrang (18) einmünden und aus dem der Leitungsabschnitt (16) ausmündet.

10. Verfahren zum Betreiben einer Heißgetränkezubereitungseinrichtung mit einem Durchlauferhitzer (14) und mit einem Wasservorratstank (10; 30), mit den folgenden Verfahrensschritten:
a) Pumpen von Vorratswasser aus dem Wasservorratstank (10; 30) als Kühlwasser durch den erhitzen Durchlauferhitzer (14),
b) Zurückführen des Kühlwassers in einen Pumpenvorlauf.
